# EUROPEAN PATENT SPECIFICATION

(11) **EP 3 905 628 B1**
(45) Date of publication and mention of the grant of the patent: **16.08.2023**
(21) Application number: 20740921.0
(22) Date of filing: 09.01.2020
(51) Int. Cl.: H04L 69/18, H04L 61/4511, H04W 88/06, H04L 101/677

(54) **MESSAGE SENDING METHOD AND RELATED DEVICE**
NACHRICHTENSENDEVERFAHREN UND ZUGEHÖRIGE VORRICHTUNG
PROCÉDÉ D'ENVOI DE MESSAGE ET DISPOSITIF ASSOCIÉ

(30) Priority: 17.01.2019 CN 201910044779
(43) Date of publication of application: 03.11.2021
(73) Proprietor: GUANGDONG OPPO MOBILE TELECOMMUNICATIONS CORP., LTD., Dongguan, Guangdong 523860 (CN)
(72) Inventor: HUANG, Yuan, Dongguan, Guangdong 523860 (CN)
(74) Representative: Tansini, Elio Fabrizio
(86) International application number: PCT/CN2020/071254
(87) International publication number: WO 2020/147647

(56) References cited:
- CN-A- 105 991 347
- US-A1- 2014 089 523
- SAVOLAINEN NOKIA J KATO T LEMON NOMINUM T ET AL: "Improved Recursive DNS Server Selection for Multi-Interfaced Nodes; draft-ietf-mif-dns-server-selection-12.txt ", IMPROVED RECURSIVE DNS SERVER SELECTION FOR MULTI-INTERFACED NODES; DRAFT-IETF-MIF-DNS-SERVER-SELECTION-12.TXT , INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 3 August 2012 (2012-08-03), pages 1-31, XP015086723, [retrieved on 2012-08-03]

## Description

### TECHNICAL FIELD

This application relates to the technical field of electronic device, and more particularly, to a message sending method and a related device. The invention is set out in the appended set of claims.

### BACKGROUND

With the development of mobile communication technology, users have an increasing demand for data communication. At present, when electronic devices on the market (for example, smart phones, etc.) transmit data, users generally select cellular mobile network communication or Wi-Fi communication to send data, electronic devices need to compete with other devices in the same area for wireless link resources, which makes it difficult to meet users' needs for Internet access.

At present, when an electronic device accesses the login page of the connected router through a domain name, if the domain name is a custom name, the DNS message may be assigned to the cellular mobile network, which leads to failure of DNS message parse, thereby causing the electronic device unable to access the corresponding page.

US 2014/0089523 A1 discloses systems and methods for extending Inter System Routing Policies (ISRPs) of an ANDSF to enable domain name system (DNS) flows to be identified by a queried domain. Such systems and methods may include providing an ISRP with a routing rule that may be used to select a DNS sever or interface thereof and resolve DNS for a target domain name and/or corresponding target URL for a website.

### SUMMARY

The embodiments of the disclosure provide a message sending method and a related device, so as to improve the success rate of DNS message parsing when an electronic device communicates to a plurality of communication links. The invention is set out in the appended set of claims.

### BRIEF DESCRIPTION OF THE DRAWINGS

The drawings involved in the embodiments of the disclosure will be briefly introduced below.
FIG. 1 is an exemplary system architecture diagram of a wireless communication system in which an electronic device according to an embodiment of the disclosure is located;
FIG. 2 is a schematic flowchart showing a message sending method according to an embodiment of the disclosure;
FIG. 3 is a schematic flowchart showing another message sending method according to an embodiment of the disclosure;
FIG. 4 is a schematic flowchart showing yet another message sending method according to an embodiment of the disclosure;
FIG. 5 is a schematic diagram showing the structure of an electronic device according to an embodiment of the disclosure; and
FIG. 6 is a block diagram showing the functional units of a message sending apparatus according to an embodiment of the disclosure.

### DETAILED DESCRIPTION OF PREFERRED EMBODIMENTS

In order to enable those of ordinary skill in the art to better understand the solutions of the disclosure, the technical solutions in the embodiments of the disclosure will be clearly and completely described below with reference to the drawings in the embodiments of the disclosure. Obviously, the described embodiments are only some of the embodiments of this application, rather than all the embodiments. Based on the embodiments in the disclosure, all other embodiments obtained by those of ordinary skill in the art without creative work shall fall within the protection scope of this disclosure.

The terms "first", "second", etc. in the specification, claims, and drawings of the disclosure are used to distinguish different objects, but not to describe a specific sequence. In addition, the terms "including", "having", and any variations thereof are intended to cover non-exclusive inclusion. For example, a process, a method, a system, a product, or a device that includes a series of steps or units is not limited to the listed steps or units, but optionally includes unlisted steps or units, or optionally includes other steps or units inherent to this process, method, product, or device.

Mentioning "embodiment" herein means that a specific feature, structure, or characteristic described with reference to the embodiment may be included in at least one embodiment of the disclosure. The appearance of "embodiment" in various places of the specification does not necessarily refer to the same embodiment, nor is it an independent or alternative embodiment mutually exclusive with other embodiments. Those of ordinary skill in the art explicitly and implicitly understand that the embodiments described herein can be combined with other embodiments.

The electronic device involved in the embodiments of the disclosure may be electronic devices with data transmission capabilities. The electronic devices may include various handheld devices, vehicle-mounted devices, wearable devices and computing devices with wireless communication functions, or other processing devices connected to wireless modems, and various forms of User Equipment (UE), Mobile Station (MS), terminal device, etc.

The embodiments of the disclosure are described in detail below.

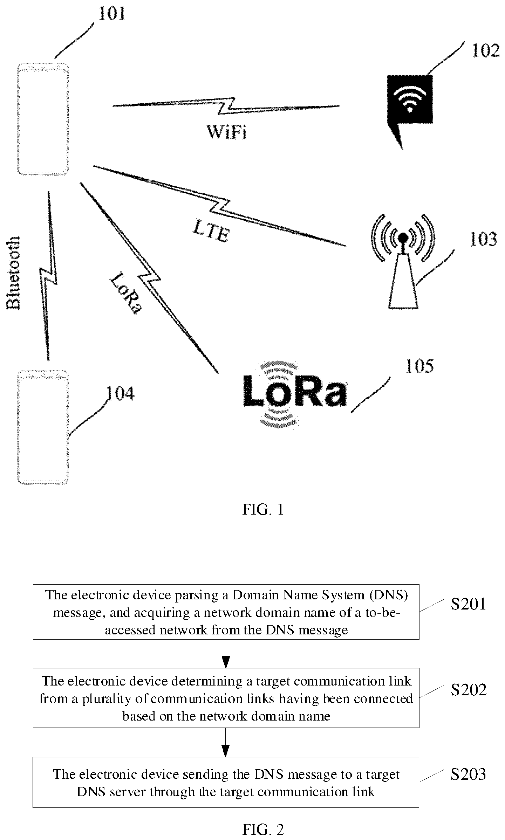

Link aggregation means that a device can use two or more network ports to access the Internet at the same time. For example, the mobile phone uses Wi-Fi and data network for network access at the same time through link aggregation. In the android network system, when Wi-Fi is enabled, the data network is made to be unavailable (ConnectivityService network scoring mechanism causes the data network to be disconnected), while link aggregation requires at least two available networks, therefore, the prerequisite of the Service-Level Agreement (SLA) is to enable Wi-Fi and data networks to coexist. As shown in FIG. 1, the current electronic device 101 can be connected to a data network 103, which is a communication network configured to transmit data service; the electronic device 101 can also be connected to Wi-Fi 102, which is a technology that allows electronic devices to connect to a wireless LAN, usually using 2.4G UHF or 5G SHF ISM radio frequency band; the electronic device 101 can also be connected to Bluetooth communication 104, which is a wireless technology standard that can realize short-distance network sharing and data exchange among fixed devices, mobile devices, building personal area networks (using 2.4-2.485GHz UHF radio waves in ISM band); and the electronic device 101 can also be connected to a LoRa communication module, which is a long-distance wireless transmission technology based on spread spectrum technology.

FIG. 2 illustrates a schematic flowchart showing a message sending method according to an embodiment of the disclosure, the method is applied to the electronic device as shown in FIG. 1. As shown in the figure, the message sending method includes:
S201: The electronic device parsing a Domain Name System (DNS) message, and acquiring a network domain name of a to-be-accessed network from the DNS message.

The DNS is a distributed database serving as a mapping between domain names and IP addresses on the World Wide Web, which enables users to access the Internet more conveniently without remembering the IP number string that can be directly read by the machine. The DNS message is used for determining, by through corresponding DNS server, the corresponding IP address according to the domain name therein.

S202: The electronic device determining a target communication link from a plurality of communication links having been connected to electronic device based on the network domain name.

The electronic device is in a link aggregation state as shown in FIG. 1, and the plurality of communication links having been connected to electronic device may include any two or more of a cellular data network, a Wi-Fi, a Bluetooth communication, a LoRa communication, and a dedicated hotspot for smart furniture devices (for example, boxes dedicated configured for various smart homes), which is not limited here.

The specific implementation manners for the electronic device to determine a target communication link from a plurality of communication links having been connected to electronic device based on the network domain name may be various. For example, the electronic device may pre-store a corresponding relationship between network domain names and communication links, and query the corresponding relationship based on the network domain name to determine the target communication link; or the network domain names may be classified into a first type and a second type, where the first type may be network domain names customized by some service providers, that is, the network domain names that can only be parsed successfully through private DNS servers, and the second type may be network domain names that can be parsed through public or local DNS servers, such as the network domain names of Baidu, World Wide Web, etc., than the electronic device may select different target communication links according to different types, which is not limited here.

S203: The electronic device sending the DNS message to a target DNS server through the target communication link.

In the case of link aggregation, all data packets sent by the electronic device will be offloaded to different communication links for transmission through the offloading mechanism. However, when the data packet is a DNS message and the network domain name corresponding to the DNS message is the first type mentioned above, if the DNS message is transported to the local or public DNS server through the cellular data network under the offloading mechanism, the domain name corresponding to the DNS message is not included in the list of domain names and corresponding IP address stored in the DNS server, thereby leading to parse failure. Therefore, the target communication link is selected based on the network domain name to send the DNS message to a target DNS server, such that the target DNS server parses the DNS message successfully, and acquires the corresponding IP address, and then logs in to the router login page.

In this embodiment, the electronic device parses the DNS message, and acquires the network domain name of the to-be-accessed network from the DNS message, determines the target communication link from a plurality of communication links having been connected to electronic device based on the network domain name, and finally sends the DNS message to the target DNS server through the target communication link. It can be seen that when multiple communication links are enabled, the electronic device determine the target communication link to send the DNS message according to the to-be-accessed network domain name obtained by parsing the DNS message, which is conducive to improving the rationality of DNS message sending, by avoiding transporting the DNS messages corresponding to some custom network domain names through the cellular mobile network, the DNS server's success rate in parsing DNS messages is improved, and the efficiency of message parse is effectively improved.

In a possible example, the determining, based on the network domain name, the target communication link from the plurality of communication links having been connected to electronic device includes:
searching a blacklist based on the network domain name;
determining a plurality of first reference communication links from the plurality of communication links having been connected to electronic device in response to detecting that the network domain name is included in the blacklist, wherein the plurality of first reference communication links are classified into a first type of communication links; and
determining the target communication link from the plurality of first reference communication links.

The blacklist may be preset in the electronic device by technical developers before shipment of the electronic device, or the blacklist may be set by the electronic device according to the message of success or failure of parsing fed back from the DNS server, which is not limited here. The blacklist includes a plurality of network domain names belonging to the first type mentioned above.

The plurality of communication links include the first type of communication links and the second type of communication links. The electronic device is preset with the corresponding type of each communication link. Wherein each network domain name included in the blacklist corresponds to the first type of communication links, and the first type of communication links may be, for example, a Wi-Fi, a dedicated hotspot for smart furniture devices (for example, boxes dedicated configured for various smart homes).

The specific implementation manners for determining the target communication link from the plurality of first reference communication links may be various. For example, the target communication link corresponding to the network domain name may be determined according to the name field of the network domain name, or alternatively, when Wi-Fi is included in the plurality of connected first reference communication links, Wi-Fi is preferably determined as the target communication link, which is not limited here.

In this example, the electronic device searches the blacklist based on the network domain name, when the network domain name is included in the blacklist, the first type of communication links corresponding to this situation is determined to ensure that some custom network domain names in the blacklist can be successfully parsed in corresponding DNS servers. It can be seen that the method of directly querying the blacklist is beneficial to improving the speed and convenience of message sending.

In this possible example, the determining the target communication link from the plurality of first reference communication links includes:
acquiring a plurality of link identifiers of the plurality of first reference communication links;
determining, from the plurality of link identifiers, a target link identifier matched with the network domain name; and
taking a communication link corresponding to the target link identifier as the target communication link.

Each first reference communication link may include a link identifier, and the link identifier may be the link name of the first reference communication link. For example, the link identifier of cellular data communication may be LTE, and the link identifiers of the dedicated hotspots for smart furniture devices (for example, boxes dedicated configured for various smart homes) may be the names of manufacturers corresponding to the smart furniture devices, which is not limited here.

The specific implementation manner for determining, from the plurality of link identifiers, a target link identifier matched with the network domain name may be determining the matching degrees between the link identifiers and the keyword or key letter in the network domain name. When a matching degree is greater than the preset matching degree, the corresponding link identifier is determined to be the target link identifier, for example, the network domain name "mi" may correspond to the link identifier of the dedicated hotspot of Xiaomi box; when there is no link identifier whose matching degree with the network domain name is greater than the preset matching degree in the plurality of link identifiers, the link identifier of the preset communication link is selected as the target link identifier, such as the link identifier corresponding to Wi-Fi, which is not limited here.

In this example, the electronic device determines the communication link corresponding to the link identifier that is matched with the network domain name as the target communication link to realize the private network, which is beneficial to improving the success rate of domain name conversion and logging in to the router, and the rationality of communication link offload.

The determining, based on the network domain name, the target communication link from the plurality of communication links having been connected to electronic device, includes:
searching a blacklist based on the network domain name;
determining a plurality of second reference communication links from the plurality of communication links having been connected to electronic device in response to detecting that the network domain name is not included in the blacklist, wherein the plurality of second reference communication links are classified into a second type of communication links; and
determining the target communication link from the plurality of second reference communication links.

The plurality of communication links having been connected to electronic device may include communication links that belong to both the first type of communication links and the second type of communication links, such as Wi-Fi, etc. Network domain names that are not included in the blacklist correspond to the second type mentioned above, the DNS message may be transported through the second type of communication links such as cellular mobile, without failure in parsing.

The specific implementation manners for determining the target communication link from the plurality of second reference communication links may be various. The target communication link may be determined according to the respective channel quality parameters of the channels used by each second reference communication link, the target communication link may also be determined according to the data transmission rate of each second reference communication link, which is not limited here.

In this example, when the electronic device detects that the network domain name is not included in the blacklist, it determines the target communication link from the plurality of second reference communication links which are classified into the second type of communication links, which is beneficial to improving the rationality of DNS message sending.

In this possible example, the determining the target communication link from the plurality of second reference communication links includes:
determining corresponding channels used by each of the plurality of second reference communication links;
determining respective channel quality parameters of the channels used by each second reference communication link; and
determining the target communication link according to the channel quality parameters.

The channel quality parameter may be calculated for each channel. The channel quality parameter includes the capacity, network speed, network delay of the channel, etc. To calculate the network speed, by reading two network traffic of the interface, and calculating a difference between the traffic recorded in the former time and the traffic recorded in the later time, the traffic amount in the interface in one second, that is, the network speed, is obtained. The network delay is calculated based on the round-trip time statistical algorithm of the data in the channel.

The specific implementation manner for determining the target communication link according to the respective channel quality parameters of each of the second reference communication links may be: sorting the plurality of second reference communication links according to respective channel quality parameters and selecting the one with highest priority as the target communication link, or selecting any one of second reference communication links whose channel quality parameter is greater than the preset quality threshold as the target communication link, which is not uniquely limited here.

In this example, the electronic device selects the target communication link according to the channel quality parameters of the plurality of second reference communication links, which improves the data transmission rate and avoids network delay while ensuring the success of DNS message parse.

After the sending the DNS message to a target DNS server through the target communication link, the method further includes:
listing the network domain name corresponding to the DNS message into the blacklist in response to receiving a message of failing to parse the DNS message from the target DNS server.

The target DNS server may send the message of success or failure of parsing to the electronic device, and the message may be a message identifier, for example, 1 represents success, 0 represents failure, etc., which is not limited here.

When the network domain name corresponding to the DNS message is not included in the blacklist, there are two possibilities. The first possibility is that the network domain name belongs to the second type. The second possibility is that the network domain name belongs to the first type, but it is not added to the blacklist, at this time, the DNS message will be sent to the local or public DNS server for parsing through the target communication link, such as cellular data communication link, and when the message of failure of parsing is received, it indicates that the network domain name belongs to the first type and is not listed in the blacklist, therefore, list the network domain name into the blacklist.

In this example, the electronic device lists the network domain name into the blacklist when receiving the message of failing to parse the DNS message from the target DNS server, which effectively avoids the subsequent failure of parsing of the network domain name and improves the accuracy of the blacklist.

In a possible example, the method further includes:
transporting the DNS message from an application layer of Linux operating system to a network layer via a transport layer; and
in the network layer, when the DNS message is transported to a Hook at OUTPUT for sending local data packets in the firewall architecture, performing operations of the parsing a DNS message, and acquiring a network domain name of a to-be-accessed network from the DNS message and the determining, based on the network domain name, a target communication link from a plurality of communication links having been connected to electronic device by executing a preset processing function.

The preset processing function is the function corresponding to the message sending method.

The processing process of sending the packet (the data packet of the DNS message) by the electronic device is: sending the data packet from the application layer of the Linux operating system to the transport layer TCP/UDP, then sending it to the Hook point at OUTPUT (for data packet sending) in the firewall architecture in the IP layer of the network layer through routing judgment, then sending it to POSTROUTING (the processing point of the data packet) in the public network, and then sending it to the communication link through the driver. Therefore, it can be seen that the DNS message will inevitably pass through the Hook point at OUTPUT, so the preset processing function is set here.

In this example, the electronic device sets the operations of parsing a DNS message, and acquiring a network domain name of a to-be-accessed network from the DNS message and determining, based on the network domain name, a target communication link from a plurality of communication links having been connected to electronic device at the hook point (Hook) of OUTPUT (for sending the local data packet) in the firewall architecture, which is conducive to improving the effective processing prior to DNS message sending and determining the communication link, thereby improving the effectiveness of message sending.

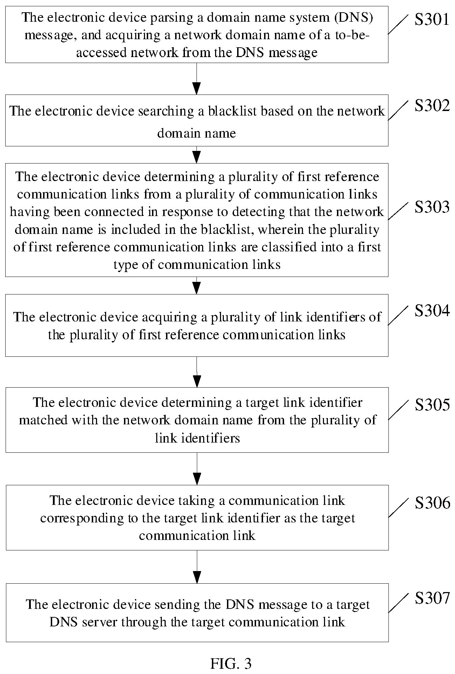

Consistent with the above embodiment shown in FIG. 2, FIG. 3 illustrates a schematic flowchart showing a message sending method according to an embodiment of the disclosure, the method is applied to the electronic device as shown in FIG. 1. As shown in the figure, the message sending method includes:
S301: the electronic device parsing a domain name system (DNS) message, and acquiring a network domain name of a to-be-accessed network from the DNS message;
S302: the electronic device searching a blacklist based on the network domain name;
S303: the electronic device determining a plurality of first reference communication links from a plurality of communication links having been connected to electronic device in response to detecting that the network domain name is included in the blacklist, wherein the plurality of first reference communication links are classified into a first type of communication links;
S304. the electronic device acquiring a plurality of link identifiers of the plurality of first reference communication links;
S305: the electronic device determining a target link identifier matched with the network domain name from the plurality of link identifiers;
S306: the electronic device taking a communication link corresponding to the target link identifier as the target communication link; and
S307: the electronic device sending the DNS message to a target DNS server through the target communication link.

In this embodiment, the electronic device parses the DNS message, and acquires the network domain name of the to-be-accessed network from the DNS message, determines the target communication link from a plurality of communication links having been connected to electronic device based on the network domain name, and finally sends the DNS message to the target DNS server through the target communication link. It can be seen that when multiple communication links are enabled, the electronic device determine the target communication link to send the DNS message according to the to-be-accessed network domain name obtained by parsing the DNS message, which is conducive to improving the rationality of DNS message sending, by avoiding transporting the DNS messages corresponding to some custom network domain names through the cellular mobile network, the DNS server's success rate in parsing DNS messages is improved, and the efficiency of message parse is effectively improved.

In addition, the electronic device searches the blacklist based on the network domain name, when the network domain name is included in the blacklist, the first type of communication links corresponding to this situation is determined to ensure that some custom network domain names in the blacklist can be successfully parsed in corresponding DNS servers. It can be seen that the method of directly querying the blacklist is beneficial to improving the speed and convenience of message sending.

In addition, the electronic device determines the communication link corresponding to the link identifier that is matched with the network domain name as the target communication link to realize the private network, which is beneficial to improving the success rate of domain name conversion and logging in to the router, and the rationality of communication link offload.

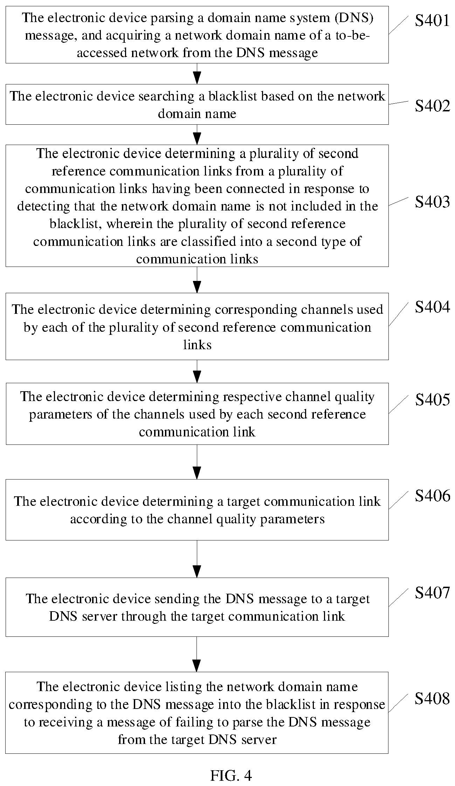

Consistent with the above embodiment shown in FIG. 2, FIG. 4 illustrates a schematic flowchart showing a message sending method according to an embodiment of the disclosure, the method is applied to the electronic device as shown in FIG. 1, and the electronic device has established a plurality of wireless communication links. As shown in the figure, the message sending method includes:
S401: the electronic device parsing a domain name system (DNS) message, and acquiring a network domain name of a to-be-accessed network from the DNS message;
S402: the electronic device searching a blacklist based on the network domain name;
S403: the electronic device determining a plurality of second reference communication links from a plurality of communication links having been connected to electronic device in response to detecting that the network domain name is not included in the blacklist, wherein the plurality of second reference communication links are classified into a second type of communication links;
S404: the electronic device determining corresponding channels used by each of the plurality of second reference communication links;
S405. the electronic device determining respective channel quality parameters of the channels used by each second reference communication link;
S406: the electronic device determining a target communication link according to the channel quality parameters;
S407: the electronic device sending the DNS message to a target DNS server through the target communication link; and
S408: the electronic device listing the network domain name corresponding to the DNS message into the blacklist in response to receiving a message of failing to parse the DNS message from the target DNS server.

In this embodiment, the electronic device parses the DNS message, and acquires the network domain name of the to-be-accessed network from the DNS message, determines the target communication link from a plurality of communication links having been connected to electronic device based on the network domain name, and finally sends the DNS message to the target DNS server through the target communication link. It can be seen that when multiple communication links are enabled, the electronic device determine the target communication link to send the DNS message according to the to-be-accessed network domain name obtained by parsing the DNS message, which is conducive to improving the rationality of DNS message sending, by avoiding transporting the DNS messages corresponding to some custom network domain names through the cellular mobile network, the DNS server's success rate in parsing DNS messages is improved, and the efficiency of message parse is effectively improved.

In addition, the electronic device lists the network domain name into the blacklist when receiving, the message of failing to parse the DNS message from the target DNS server, which effectively avoids the subsequent failure of parsing of the network domain name and improves the accuracy of the blacklist.

In addition, the electronic device selects the target communication link according to the channel quality parameters of the plurality of second reference communication links, which improves the data transmission rate and avoids network delay while ensuring the success of DNS message parse.

In addition, when the electronic device detects that the network domain name is not included in the blacklist, it determines the target communication link from the plurality of second reference communication links which are classified into the second type of communication links, which is beneficial to improving the rationality of DNS message sending.

Consistent with the above embodiments shown in FIGS. 2-4, FIG. 5 illustrates a schematic diagram showing the structure of an electronic device 500 according to an embodiment of the disclosure. As shown in the figure, the electronic device 500 includes an application processor 510, a memory 520, a communication interface 530, and one or more programs 521. The one or more programs 521 are stored in the memory 520 and configured to be executed by the application processor 510. The one or more programs 521 include instructions for performing the following steps:
parsing a domain name system (DNS) message, and acquiring a network domain name of a to-be-accessed network from the DNS message;
determining, based on the network domain name, a target communication link from a plurality of communication links having been connected to the electronic device 500; and
sending the DNS message to a target DNS server through the target communication link.

In this embodiment, the electronic device parses the DNS message, and acquires the network domain name of the to-be-accessed network from the DNS message, determines the target communication link from a plurality of communication links having been connected to the electronic device 500 based on the network domain name, and finally sends the DNS message to the target DNS server through the target communication link. It can be seen that when multiple communication links are enabled, the electronic device determine the target communication link to send the DNS message according to the to-be-accessed network domain name obtained by parsing the DNS message, which is conducive to improving the rationality of DNS message sending, by avoiding transporting the DNS messages corresponding to some custom network domain names through the cellular mobile network, the DNS server's success rate in parsing DNS messages is improved, and the efficiency of message parse is effectively improved.

In a possible example, in the aspect of determining a target communication link from a plurality of communication links having been connected to the electronic device 500 based on the network domain name, the instructions in the program 521 are specifically configured to perform the following operations: searching a blacklist based on the network domain name; determining a plurality of first reference communication links from the plurality of communication links having been connected to the electronic device 500 in response to detecting that the network domain name is included in the blacklist, wherein the plurality of first reference communication links are classified into a first type of communication links; and determining the target communication link from the plurality of first reference communication links.

In this possible example, in the aspect of determining the target communication link from the plurality of first reference communication links, the instructions in the program 521 are specifically configured to perform the following operations: acquiring a plurality of link identifiers of the plurality of first reference communication links; determining, from the plurality of link identifiers, a target link identifier matched with the network domain name; and taking a communication link corresponding to the target link identifier as the target communication link.

In the aspect of determining a target communication link from a plurality of communication links having been connected to the electronic device 500 based on the network domain name, the instructions in the program 521 are specifically configured to perform the following operations: searching a blacklist based on the network domain name, determining a plurality of second reference communication links from the plurality of communication links having been connected to the electronic device 500 in response to detecting that the network domain name is not included in the blacklist, wherein the plurality of second reference communication links are classified into a second type of communication links; and determining the target communication link from the plurality of second reference communication links.

In this possible example, in the aspect of determining the target communication link from the plurality of second reference communication links, the instructions in the program 521 are specifically configured to perform the following operations: determining corresponding channels used by each of the plurality of second reference communication links; determining respective channel quality parameters of the channels used by each second reference communication link; and determining the target communication link according to the channel quality parameters.

The one or more programs 521 further include instructions for performing the following step: after the sending the DNS message to a target DNS server through the target communication link, listing the network domain name corresponding to the DNS message into the blacklist in response to receiving a message of failing to parse the DNS message from the target DNS server.

In a possible example, the one or more programs 521 further include instructions for performing the following steps: transporting the DNS message from an application layer of Linux operating system to a network layer via a transport layer; and in the network layer, when the DNS message is transported to a Hook at OUTPUT for sending local data packets in the firewall architecture, performing operations of the parsing a DNS message, and acquiring a network domain name of a to-be-accessed network from the DNS message and the determining, based on the network domain name, a target communication link from a plurality of communication links having been connected to the electronic device 500 by executing a preset processing function.

The foregoing description mainly introduces the solutions of the embodiments of the disclosure from the perspective of the execution process on the method side. It can be understood that, in order to implement the above-mentioned functions, the electronic device includes corresponding hardware structures and/or software modules for implementing each function. For those of ordinary skill in the art, it is easy to realize that the disclosure can be implemented in the form of hardware or a combination of hardware and computer software in combination with the units and algorithm steps of each example described in the embodiments disclosed herein. Whether a certain function is executed by hardware or executed in a way that computer software drives hardware depends on the specific application and design constraint conditions of the technical solution. For each specific application, professionals and technicians can use different methods to implement the described functions, but such implementation should not be considered beyond the scope of the disclosure.

The embodiment of the disclosure may divide the functional units of the electronic device according to the method example. For example, each functional unit may be divided corresponding to each function, or two or more functions may be integrated into one processing unit. The integrated unit mentioned above can be implemented in the form of hardware or in the form of software functional unit. It should be noted that the division of units in the embodiment of the disclosure is illustrative, and is only a logical function division, and there may be other division methods in actual implementation.

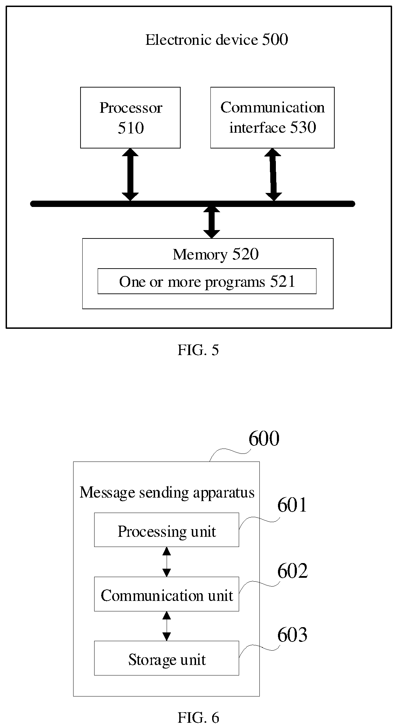

FIG. 6 illustrates a block diagram showing the functional units of a message sending apparatus 600 involved in an embodiment of the disclosure. The message sending apparatus 600 is applied to an electronic device, and the message sending apparatus 600 includes a processing unit 601 and a communication unit 602. The processing unit 601 is configured to: parse a domain name system (DNS) message, and acquire a network domain name of a to-be-accessed network from the DNS message; determine a target communication link from a plurality of communication links having been connected to the electronic device based on the network domain name; and send the DNS message to a target DNS server through the target communication link and the communication unit 602.

The message sending apparatus 600 may further include a storage unit 603 for storing program codes and data of the electronic device. The processing unit 601 may be a processor, the communication unit 602 may be a touch screen or a transceiver, and the storage unit 603 may be a memory.

In this embodiment, the electronic device parses the DNS message, and acquires the network domain name of the to-be-accessed network from the DNS message, determines the target communication link from a plurality of communication links having been connected to the electronic device based on the network domain name, and finally sends the DNS message to the target DNS server through the target communication link. It can be seen that when multiple communication links are enabled, the electronic device determine the target communication link to send the DNS message according to the to-be-accessed network domain name obtained by parsing the DNS message, which is conducive to improving the rationality of DNS message sending, by avoiding transporting the DNS messages corresponding to some custom network domain names through the cellular mobile network, the DNS server's success rate in parsing DNS messages is improved, and the efficiency of message parse is effectively improved.

In a possible example, in the aspect of determining a target communication link from a plurality of communication links having been connected to the electronic device based on the network domain name, the processing unit 601 is specifically configured to: search a blacklist based on the network domain name; determine a plurality of first reference communication links from the plurality of communication links having been connected to the electronic device in response to detecting that the network domain name is included in the blacklist, wherein the plurality of first reference communication links are classified into a first type of communication links; and determine the target communication link from the plurality of first reference communication links.

In this possible example, in the aspect of determining the target communication link from the plurality of first reference communication links, the processing unit 601 is specifically configured to: acquire a plurality of link identifiers of the plurality of first reference communication links; determine a target link identifier matched with the network domain name from the plurality of link identifiers; and take a communication link corresponding to the target link identifier as the target communication link.

In the aspect of determining a target communication link from a plurality of communication links having been connected to the electronic device based on the network domain name, the processing unit 601 is specifically configured to: search a blacklist based on the network domain name, determine a plurality of second reference communication links from the plurality of communication links having been connected to the electronic device in response to detecting that the network domain name is not included in the blacklist, wherein the plurality of second reference communication links are classified into a second type of communication links; and determine the target communication link from the plurality of second reference communication links.

In this possible example, in the aspect of determining the target communication link from the plurality of second reference communication links, the processing unit 601 is specifically configured to: determine corresponding channels used by each of the plurality of second reference communication links; determine respective channel quality parameters of the channels used by each second reference communication link; and determine the target communication link according to the channel quality parameters.

After sending the DNS message to a target DNS server through the target communication link, the processing unit 601 is further configured to: list the network domain name corresponding to the DNS message into the blacklist in response to receiving, through the communication unit 602, a message of failing to parse the DNS message from the target DNS server.

In a possible example, the processing unit 601 is further configured to: transport the DNS message from an application layer of Linux operating system to a network layer via a transport layer; and in the network layer, when the DNS message is transported to a Hook at OUTPUT for sending local data packets in the firewall architecture, perform operations of the parsing a DNS message, and acquiring a network domain name of a to-be-accessed network from the DNS message and the determining, based on the network domain name, a target communication link from a plurality of communication links having been connected to the electronic device by executing a preset processing function.

An embodiment of the disclosure further provides a computer storage medium, the computer storage medium stores a computer program for electronic data exchange, and the computer program enables a computer to perform part or all of the steps of any one of methods recorded in the above method embodiments. The computer includes an electronic device.

An embodiment of the disclosure further provides a computer program product. The computer program product includes a non-transitory computer-readable storage medium storing a computer program. The computer program is operable to cause a computer to perform part or all of the steps of any one of methods described in the above method embodiments. The computer program product may be a software installation package, and the computer includes an electronic device.

It should be noted that, for the sake of simple description, the above method embodiments are all expressed as a series of action combinations. However, those of ordinary skill in the art should know that the disclosure is not limited to the described action sequence, because according to the disclosure, some steps may be performed in other order or performed simultaneously. Secondly, those of ordinary skill in the art should also know that the embodiments described in the specification are all preferred embodiments, and the actions and modules involved are not necessarily required by the application.

In the above embodiments, the description of each embodiment has its own emphasis. For the part not described in detail in one embodiment, reference may be made to related descriptions of other embodiments.

In the several embodiments provided in the disclosure, it should be understood that the disclosed apparatus may be implemented in other forms. For example, the apparatus embodiments described above are only illustrative. For example, the division of units is only a logical function division, and there may be other division methods in actual implementation, for example, multiple units or components can be combined or integrated into another system, or some features can be ignored or not implemented. In addition, the shown or discussed coupling, such as direct coupling or communication connection, may be indirect coupling or communication connection through some interfaces, apparatus, or units, and it may be an electrical coupling or other forms of coupling.

The units described above as separate components may or may not be physically separated, and the components shown as units may or may not be physical units, that is, the units may be located in one place, or they may be distributed on multiple network units. Some or all of the units may be selected according to actual needs to achieve the objectives of the solutions of the embodiments.

In addition, the functional units in each embodiment of the disclosure may be integrated into one processing unit, or each unit may exist physically alone, or two or more units may be integrated into one unit. The integrated unit can be implemented in the form of hardware or in the form of software functional unit.

If the integrated unit is implemented in the form of a software functional unit and sold or used as an independent product, it can be stored in a computer readable memory. Based on this understanding, the technical solution of the disclosure essentially, or the part that contributes to the existing technology, or all or part of the technical solution can be embodied in the form of a software product. The computer software product is stored in a memory, and includes a number of instructions to enable a computer device (which may be a personal computer, a server, or a network device, etc.) to perform all or part of the steps of the methods in various embodiments of the disclosure. The memory includes U disk, Read-Only Memory (ROM), Random Access Memory (RAM), mobile hard disk, magnetic disk, or optical disk, and other media that can store program codes.

Those of ordinary skill in the art can understand that all or part of the steps in various methods of the above embodiments can be completed by relevant hardware with the instruction of a program. The program can be stored in a computer-readable memory, and the memory may include flash disk, Read-Only Memory (ROM), Random Access Memory (RAM), magnetic disk, or CD, etc.

The embodiments of the disclosure are described in detail above, and specific examples are used herein to illustrate the principles and implementation of the disclosure. The descriptions of the above embodiments are only used to help understand the methods and core ideas of the disclosure; at the same time, for those of ordinary skill in the art, the ideas of the disclosure may change in the specific implementation and the scope of application. In summary, the content of the specification should not be construed as limiting the disclosure.

## Claims

1. A message sending method, applied to an electronic device (101, 500), the method comprising:
parsing (S201, S301, S401) a domain name system (DNS) message, and acquiring a network domain name of a to-be-accessed network from the DNS message;
determining (S202), based on the network domain name, a target communication link from a plurality of communication links having been connected to the electronic device (101, 500); and
sending (S203, S307, S407) the DNS message to a target DNS server through the target communication link;
wherein the determining (S202), based on the network domain name, a target communication link from a plurality of communication links having been connected to the electronic device (101, 500), comprises:
searching (S302, S402) a blacklist based on the network domain name;
determining (S403) a plurality of second reference communication links from the plurality of communication links having been connected to the electronic device (101, 500) in response to detecting that the network domain name is not included in the blacklist, wherein the plurality of second reference communication links are classified into a second type of communication links; and
determining the target communication link from the plurality of second reference communication links;
wherein after the sending (S203, S307, S407) the DNS message to a target DNS server through the target communication link, the method further comprising:
listing (S408) the network domain name corresponding to the DNS message into the blacklist in response to receiving a message of failing to parse the DNS message from the target DNS server.

2. The method as claimed in claim 1, wherein the determining (S202), based on the network domain name, a target communication link from a plurality of communication links having been connected to the electronic device (101, 500), further comprises:
determining (S303) a plurality of first reference communication links from the plurality of communication links having been connected to the electronic device (101, 500) in response to detecting that the network domain name is included in the blacklist, wherein the plurality of first reference communication links are classified into a first type of communication links; and
determining the target communication link from the plurality of first reference communication links.

3. The method as claimed in claim 2, wherein the determining the target communication link from the plurality of first reference communication links comprises:
acquiring (S304) a plurality of link identifiers of the plurality of first reference communication links;
determining (S305), from the plurality of link identifiers, a target link identifier matched with the network domain name; and
taking (S306) a communication link corresponding to the target link identifier as the target communication link.

4. The method as claimed in claim 2, wherein the determining the target communication link from the plurality of first reference communication links comprises:
determining a first communication link as the target communication link in a condition that the first communication link is included in the plurality of first reference communication links.

5. The method as claimed in claim 1, wherein the determining the target communication link from the plurality of second reference communication links comprises:
determining (S404) corresponding channels used by each of the plurality of second reference communication links;
determining (S405) respective channel quality parameters of the channels used by each second reference communication link; and
determining (S406) the target communication link according to the channel quality parameters.

6. The method as claimed in any one of claims 1 to 5, further comprising:
transporting the DNS message from an application layer of an operating system to a network layer via a transport layer; and
in the network layer, when the DNS message is transported to a Hook at OUTPUT for sending local data packets in the firewall architecture, performing operations of the parsing a DNS message, and acquiring a network domain name of a to-be-accessed network from the DNS message and the determining, based on the network domain name, a target communication link from a plurality of communication links having been connected by executing a preset processing function.

7. A message sending apparatus (600), applied to an electronic device (101, 500), wherein the message sending apparatus (600) comprises a processing unit (601) and a communication unit (602), and the processing unit (601) is configured to:
parse a domain name system (DNS) message, and acquire a network domain name of a to-be-accessed network from the DNS message;
determine, based on the network domain name, a target communication link from a plurality of communication links having been connected to the electronic device (101, 500); and
send, controlled by the communication unit (602), the DNS message to a target DNS server through the target communication link;
wherein that the processing unit is (601) is configured to determine, based on the network domain name, a target communication link from a plurality of communication links having been connected to the electronic device (101, 500), comprising:
search a blacklist based on the network domain name;
determine a plurality of second reference communication links from the plurality of communication links having been connected to the electronic device (101, 500) in response to detecting that the network domain name is not included in the blacklist, wherein the plurality of second reference communication links are classified into a second type of communication links;
determine the target communication link from the plurality of second reference communication links;
wherein the processing unit (601) is further configured to:
list the network domain name corresponding to the DNS message into the blacklist in response to receiving, through the communication unit (602), a message of failing to parse the DNS message from the target DNS server.

8. The apparatus (600) as claimed in claim 7, wherein that the processing unit (601) is configured to determine, based on the network domain name, a target communication link from a plurality of communication links having been connected to the electronic device (101, 500), further comprising:
determine a plurality of first reference communication links from the plurality of communication links having been connected to the electronic device (101, 500) in response to detecting that the network domain name is included in the blacklist, wherein the plurality of first reference communication links are classified into a first type of communication links;
acquire a plurality of link identifiers of the plurality of first reference communication links;
determine a target link identifier matched with the network domain name from the plurality of link identifiers; and
take a communication link corresponding to the target link identifier as the target communication link.

9. The apparatus as claimed in claim 8, wherein the processing unit is (601) is configured to determine the target communication link from the plurality of second reference communication links, comprising:
determine corresponding channels used by each of the plurality of second reference communication links;
determine respective channel quality parameters of the channels used by each second reference communication link; and
determine the target communication link according to the channel quality parameters.

10. The apparatus (600) as claimed in any one of claims 7 to 9, wherein the processing unit (601) is further configured to:
transport the DNS message from an application layer of Linux operating system to a network layer via a transport layer; and
in the network layer, when the DNS message is transported to a Hook at OUTPUT for sending local data packets in the firewall architecture, perform operations of the parsing a DNS message, and acquiring a network domain name of a to-be-accessed network from the DNS message and the determining, based on the network domain name, a target communication link from a plurality of communication links having been connected by executing a preset processing function.

11. An electronic device (500), comprising a processor (510), a memory (520), a communication interface (530), and one or more programs (521), wherein the one or more programs (521) are stored in the memory (520) and configured to be executed by the processor (510), and the one or more programs (521) comprise instructions, which when executed by the processor (510), causes the processor (510) to perform the steps in the method as claimed in any one of claims 1 to 6.

12. A computer-readable storage medium, storing a computer program for electronic data exchange, wherein the computer program, when executed by a computer, causes the computer to perform the method as claimed in any one of claims 1 to 6.

## Patentansprüche

1. Nachrichtensendeverfahren, das an einer elektronischen Vorrichtung (101, 500) angewendet wird, das Verfahren Folgendes umfassend:
Zergliedern (S201, S301, S401) einer Domänennamesystemnachricht (DNS-Nachricht) und Erfassen eines Netzwerkdomänennamens eines Netzwerks, auf das zugegriffen werden soll, aus der DNS-Nachricht;
Bestimmen (S202), auf der Grundlage des Netzwerkdomänennamens, einer Zielkommunikationsstrecke aus mehreren Kommunikationsstrecken, die mit der elektronischen Vorrichtung (101, 500) verbunden wurden; und
Senden (S203, S307, S407) der DNS-Nachricht über die Zielkommunikationsstrecke an einen Ziel-DNS-Server;
wobei das Bestimmen (S202), auf der Grundlage des Netzwerkdomänennamens, einer Zielkommunikationsstrecke aus mehreren Kommunikationsstrecken, die mit der elektronischen Vorrichtung (101, 500) verbunden wurden, Folgendes umfasst:
Durchsuchen (S302, S402) einer schwarzen Liste auf der Grundlage des Netzwerkdomänennamens;
Bestimmen (S403) mehrerer zweiter Referenzkommunikationsstrecken aus den mehreren Kommunikationsstrecken, die mit der elektronischen Vorrichtung (101, 500) verbunden wurden, als Reaktion auf Detektieren, dass der Netzwerkdomänenname nicht in der schwarzen Liste enthalten ist, wobei die mehreren zweiten Referenzkommunikationsstrecken als ein zweiter Typ von Kommunikationsstrecken klassifiziert sind; und
Bestimmen der Zielkommunikationsstrecke aus den mehreren zweiten Referenzkommunikationsstrecken;
wobei, nach dem Senden (S203, S307, S407) der DNS-Nachricht über die Zielkommunikationsstrecke an einen Ziel-DNS-Server, das Verfahren weiterhin Folgendes umfasst:
Auflisten (S408) des Netzwerkdomänennamens, welcher der DNS-Nachricht entspricht, in der schwarzen Liste als Reaktion auf Empfangen einer Nachricht, dass das Zergliedern der DNS-Nachricht von dem Ziel-DNS-Server fehlgeschlagen ist.

2. Verfahren nach Anspruch 1, wobei das Bestimmen (S202), auf der Grundlage des Netzwerkdomänennamens, einer Zielkommunikationsstrecke aus mehreren Kommunikationsstrecken, die mit der elektronischen Vorrichtung (101, 500) verbunden wurden, weiterhin Folgendes umfasst:
Bestimmen (S303) mehrerer erster Referenzkommunikationsstrecken aus den mehreren Kommunikationsstrecken, die mit der elektronischen Vorrichtung (101, 500) verbunden wurden, als Reaktion auf Detektieren, dass der Netzwerkdomänenname in der schwarzen Liste enthalten ist, wobei die mehreren ersten Referenzkommunikationsstrecken als ein erster Typ von Kommunikationsstrecken klassifiziert sind; und
Bestimmen der Zielkommunikationsstrecke aus den mehreren ersten Referenzkommunikationsstrecken.

3. Verfahren nach Anspruch 2, wobei das Bestimmen der Zielkommunikationsstrecke aus den mehreren ersten Referenzkommunikationsstrecken Folgendes umfasst:
Erfassen (S304) mehrerer Streckenkennungen der mehreren ersten Referenzkommunikationsstrecken;
Bestimmen (S305), aus den mehreren Streckenkennungen, einer Zielstreckenkennung, die zu dem Netzwerkdomänennamen passt; und
Nehmen (S306) einer Kommunikationsstrecke, die der Zielstreckenkennung entspricht, als die Zielkommunikationsstrecke.

4. Verfahren nach Anspruch 2, wobei das Bestimmen der Zielkommunikationsstrecke aus den mehreren ersten Referenzkommunikationsstrecken Folgendes umfasst:
Bestimmen einer ersten Kommunikationsstrecke als die Zielkommunikationsstrecke unter einer Bedingung, dass die erste Kommunikationsstrecke in den mehreren ersten Referenzkommunikationsstrecken enthalten ist.

5. Verfahren nach Anspruch 1, wobei das Bestimmen der Zielkommunikationsstrecke aus den mehreren zweiten Referenzkommunikationsstrecken Folgendes umfasst:
Bestimmen (S404) entsprechender Kanäle, die von jeder der mehreren zweiten Referenzkommunikationsstrecken verwendet werden;
Bestimmen (S405) jeweiliger Kanalqualitätsparameter der Kanäle, die von jeder zweiten Referenzkommunikationsstrecke verwendet werden; und
Bestimmen (S406) der Zielkommunikationsstrecke gemäß den Kanalqualitätsparametern.

6. Verfahren nach einem der Ansprüche 1 bis 5, weiterhin Folgendes umfassend:
Transportieren der DNS-Nachricht aus einer Anwendungsschicht eines Betriebssystems über eine Transportschicht in eine Netzwerkschicht; und
in der Netzwerkschicht, wenn die DNS-Nachricht an einen Basispunkt bei OUTPUT zum Senden lokaler Datenpakete in der Firewall-Architektur transportiert wird, Durchführen von Operationen des Zergliederns einer DNS-Nachricht und des Erfassens eines Netzwerkdomänennamens eines Netzwerks, auf das zugegriffen werden soll, aus der DNS-Nachricht und des Bestimmens, auf der Grundlage des Netzwerkdomänennamens, einer Zielkommunikationsstrecke aus mehreren Kommunikationsstrecken, die verbunden wurden, durch Ausführen einer voreingestellten Verarbeitungsfunktion.

7. Nachrichtensendevorrichtung (600), die an einer elektronischen Vorrichtung (101, 500) angewendet wird, wobei die Nachrichtensendevorrichtung (600) eine Verarbeitungseinheit (601) und eine Kommunikationseinheit (602) umfasst, und die Verarbeitungseinheit (601) eingerichtet ist, um:
eine Domänennamesystemnachricht (DNS-Nachricht) zu zergliedern und einen Netzwerkdomänennamen eines Netzwerks, auf das zugegriffen werden soll, aus der DNS-Nachricht zu erfassen;
auf der Grundlage des Netzwerkdomänennamens eine Zielkommunikationsstrecke aus mehreren Kommunikationsstrecken, die mit der elektronischen Vorrichtung (101, 500) verbunden wurden, zu bestimmen; und
gesteuert durch die Kommunikationseinheit (602), die DNS-Nachricht über die Zielkommunikationsstrecke an einen Ziel-DNS-Server zu senden;
wobei, dass die Steuerungseinheit (601) eingerichtet ist, um auf der Grundlage des Netzwerkdomänennamens eine Zielkommunikationsstrecke aus mehreren Kommunikationsstrecken, die mit der elektronischen Vorrichtung (101, 500) verbunden wurden, zu bestimmen, Folgendes umfasst:
eine schwarze Liste auf der Grundlage des Netzwerkdomänennamens zu durchsuchen;
mehrere zweite Referenzkommunikationsstrecken aus den mehreren Kommunikationsstrecken, die mit der elektronischen Vorrichtung (101, 500) verbunden wurden, als Reaktion auf Detektieren zu bestimmen, dass der Netzwerkdomänenname nicht in der schwarzen Liste enthalten ist, wobei die mehreren zweiten Referenzkommunikationsstrecken als ein zweiter Typ von Kommunikationsstrecken klassifiziert sind;
die Zielkommunikationsstrecke aus den mehreren zweiten Referenzkommunikationsstrecken zu bestimmen;
wobei die Verarbeitungseinheit (601) weiterhin eingerichtet ist, um:
den Netzwerkdomänennamen entsprechend der DNS-Nachricht in der schwarzen Liste als Reaktion auf Empfangen, durch die Kommunikationseinheit (602), einer Nachricht aufzulisten, dass das Zergliedern der DNS-Nachricht von dem Ziel-DNS-Server fehlgeschlagen ist.

8. Vorrichtung (600) nach Anspruch 7, wobei, dass die Steuerungseinheit (601) eingerichtet ist, um auf der Grundlage des Netzwerkdomänennamens eine Zielkommunikationsstrecke aus mehreren Kommunikationsstrecken, die mit der elektronischen Vorrichtung (101, 500) verbunden wurden, zu bestimmen, weiterhin Folgendes umfasst:
mehrere erste Referenzkommunikationsstrecken aus den mehreren Kommunikationsstrecken, die mit der elektronischen Vorrichtung (101, 500) verbunden wurden, als Reaktion auf Detektieren, dass der Netzwerkdomänenname in der schwarzen Liste enthalten ist, zu bestimmen, wobei die mehreren ersten Referenzkommunikationsstrecken als ein erster Typ von Kommunikationsstrecken klassifiziert sind;
mehrere Streckenkennungen der mehreren ersten Referenzkommunikationsstrecken zu erfassen;
eine Zielstreckenkennung, die zu dem Netzwerkdomänennamen passt, aus den mehreren Streckenkennungen zu bestimmen; und
eine Kommunikationsstrecke, die der Zielstreckenkennung entspricht, als die Zielkommunikationsstrecke zu nehmen.

9. Vorrichtung nach Anspruch 8, wobei die Verarbeitungseinheit (601) eingerichtet ist, um die Zielkommunikationsstrecke aus den mehreren zweiten Referenzkommunikationsstrecken zu bestimmen, Folgendes umfassend:
entsprechende Kanäle zu bestimmen, die von jeder der mehreren zweiten Referenzkommunikationsstrecken verwendet werden;
jeweilige Kanalqualitätsparameter der Kanäle zu bestimmen, die von jeder zweiten Referenzkommunikationsstrecke verwendet werden; und
die Zielkommunikationsstrecke gemäß den Kanalqualitätsparametern zu bestimmen.

10. Vorrichtung (600) nach einem der Ansprüche 7 bis 9, wobei die Verarbeitungseinheit (601) weiterhin eingerichtet ist, um:
die DNS-Nachricht aus einer Anwendungsschicht eines Linux-Betriebssystems über eine Transportschicht in eine Netzwerkschicht zu transportieren; und
in der Netzwerkschicht, wenn die DNS-Nachricht an einen Basispunkt bei OUTPUT zum Senden lokaler Datenpakete in der Firewall-Architektur transportiert wird, Operationen des Zergliederns einer DNS-Nachricht und des Erfassens eines Netzwerkdomänennamens eines Netzwerks, auf das zugegriffen werden soll, aus der DNS-Nachricht und des Bestimmens, auf der Grundlage des Netzwerkdomänennamens, einer Zielkommunikationsstrecke aus mehreren Kommunikationsstrecken, die verbunden wurden, durch Ausführen einer voreingestellten Verarbeitungsfunktion durchzuführen.

11. Elektronische Vorrichtung (500), einen Prozessor (510), einen Speicher (520), eine Kommunikationsschnittstelle (530) und ein oder mehrere Programme (521) umfassend, wobei das eine oder die mehreren Programme (521) in dem Speicher (520) gespeichert sind und eingerichtet sind, um durch den Prozessor (510) ausgeführt zu werden, und das eine oder die mehreren Programme (521) Befehle umfassen, die, wenn sie durch den Prozessor (510) ausgeführt werden, bewirken, dass der Prozessor (510) die Schritte in dem Verfahren nach einem der Ansprüche 1 bis 6 durchführt.

12. Computerlesbares Speichermedium, das ein Computerprogramm zum elektronischen Datenaustausch speichert, wobei das Computerprogramm, wenn es durch einen Computer ausgeführt wird, bewirkt, dass der Computer das Verfahren nach einem der Ansprüche 1 bis 6 durchführt.

## Revendications

1. Procédé d'envoi de messages, appliqué à un dispositif électronique (101, 500), le procédé comprenant :
l'analyse (S201, S301, S401) d'un message de système de noms de domaine (DNS), et l'acquisition d'un nom de domaine de réseau d'un réseau auquel on veut accéder à partir du message DNS ;
la détermination (S202), sur la base du nom de domaine de réseau, d'un lien de communication cible à partir d'une pluralité de liens de communication ayant été connectés au dispositif électronique (101, 500) ; et
l'envoi (S203, S307, S407) du message DNS à un serveur DNS cible par l'intermédiaire du lien de communication cible ;
dans lequel la détermination (S202), sur la base du nom de domaine de réseau, d'un lien de communication cible à partir d'une pluralité de liens de communication ayant été connectés au dispositif électronique (101, 500), comprend :
la recherche (S302, S402) d'une liste noire sur la base du nom de domaine de réseau ;
la détermination (S403) d'une seconde pluralité de liens de communication de référence à partir de la pluralité de liens de communication ayant été connectés au dispositif électronique (101, 500) en réponse à la détection du fait que le nom de domaine de réseau n'est pas inclus dans la liste noire, dans lequel la pluralité de seconds liens de communication de référence est classée dans un second type de liens de communication ; et
la détermination du lien de communication cible à partir de la pluralité de seconds liens de communication de référence ;
dans lequel après l'envoi (S203, S307, S407) du message DNS à un serveur DNS cible par l'intermédiaire du lien de communication cible, le procédé comprenant en outre :
l'inscription (S408) du nom de domaine de réseau correspondant au message DNS dans la liste noire en réponse à la réception d'un message d'échec de l'analyse du message DNS en provenance du serveur DNS cible.

2. Procédé selon la revendication 1, dans lequel la détermination (S202), sur la base du nom de domaine de réseau, d'un lien de communication cible à partir d'une pluralité de liens de communication ayant été connectés au dispositif électronique (101, 500), comprend en outre :
la détermination (S303) d'une pluralité de premiers liens de communication de référence à partir de la pluralité de liens de communication ayant été connectés au dispositif électronique (101, 500) en réponse à la détection du fait que le nom de domaine de réseau est inclus dans la liste noire, dans lequel la pluralité de premiers liens de communication de référence est classée dans un premier type de liens de communication ; et
la détermination du lien de communication cible à partir de la pluralité de premiers liens de communication de référence.

3. Procédé selon la revendication 2, dans lequel la détermination du lien de communication cible à partir de la pluralité de premiers liens de communication de référence comprend :
l'acquisition (S304) d'une pluralité d'identifiants de liens à partir de la pluralité de premiers liens de communication de référence ;
la détermination (S305), à partir de la pluralité d'identifiants de liens, d'un identifiant de lien cible correspondant au nom de domaine de réseau ; et
la prise (S306) d'un lien de communication correspondant à l'identifiant de lien cible en tant que lien de communication cible.

4. Procédé selon la revendication 2, dans lequel la détermination du lien de communication cible à partir de la pluralité de premiers liens de communication de référence comprend :
la détermination d'un premier lien de communication en tant que lien de communication cible à condition que le premier lien de communication soit inclus dans la pluralité de premiers liens de communication de référence.

5. Procédé selon la revendication 1, dans lequel la détermination du lien de communication cible à partir de la pluralité de seconds liens de communication de référence comprend :
la détermination (S404) de canaux correspondants utilisés par chaque lien de la pluralité de seconds liens de communication de référence ;
la détermination (S405) de paramètres de qualité de canaux respectifs des canaux utilisés par chaque second lien de communication de référence ; et
la détermination (S406) du lien de communication cible en fonction des paramètres de qualité de canaux.

6. Procédé selon l'une quelconque des revendications 1 à 5, comprenant en outre :
le transport du message DNS d'une couche d'application d'un système d'exploitation à une couche réseau par l'intermédiaire d'une couche transport ; et
dans la couche réseau, lorsque le message DNS est transporté vers une accroche au niveau de la SORTIE pour l'envoi de paquets de données locales dans l'architecture du pare-feu, la réalisation d'opérations de l'analyse d'un message DNS, et l'acquisition d'un nom de domaine de réseau d'un réseau auquel on veut accéder à partir du message DNS et la détermination, sur la base du nom de domaine de réseau, d'un lien de communication cible à partir d'une pluralité de liens de communication ayant été connectés par l'exécution d'une fonction de traitement prédéfinie.

7. Appareil d'envoi de messages (600), appliqué à un dispositif électronique (101, 500), l'appareil d'envoi de message (600) comprenant une unité de traitement (601) et une unité de communication (602), et l'unité de traitement (601) est configurée pour :
analyser un message de système de noms de domaine (DNS), et acquérir un nom de domaine de réseau d'un réseau auquel on veut accéder à partir du message DNS ;
déterminer, sur la base du nom de domaine de réseau, un lien de communication cible à partir d'une pluralité de liens de communication ayant été connectés au dispositif électronique (101, 500) ; et
envoyer, commandé par l'unité de communication (602), le message DNS à un serveur DNS cible par l'intermédiaire du lien de communication cible ;
dans lequel le fait que l'unité de traitement (601) est configurée pour déterminer, sur la base du nom de domaine de réseau, un lien de communication cible à partir d'une pluralité de liens de communication ayant été connectés au dispositif électronique (101, 500), comprenant :
la recherche d'une liste noire sur la base du nom de domaine de réseau ;
la détermination d'une pluralité de seconds liens de communication de référence à partir de la pluralité de liens de communication ayant été connectés au dispositif électronique (101, 500) en réponse à la détection du fait que le nom de domaine de réseau n'est pas inclus dans la liste noire, dans lequel la pluralité de seconds liens de communication de référence est classée dans un second type de liens de communication ;
la détermination du lien de communication cible à partir de la pluralité de seconds liens de communication de référence ;
dans lequel l'unité de traitement (601) est en outre configurée pour :
inscrire le nom de domaine de réseau correspondant au message DNS dans la liste noire en réponse à la réception, au moyen de l'unité de communication (602), d'un message d'échec de l'analyse du message DNS en provenance du serveur DNS cible.

8. Appareil (600) selon la revendication 7, dans lequel le fait que l'unité de traitement (601) est configurée pour déterminer, sur la base du nom de domaine de réseau, un lien de communication cible à partir d'une pluralité de liens de communication ayant été connectés au dispositif électronique (101, 500), comprenant en outre :
la détermination d'une pluralité de premiers liens de communication de référence à partir de la pluralité de liens de communication ayant été connectés au dispositif électronique (101, 500) en réponse à la détection du fait que le nom de domaine de réseau est inclus dans la liste noire, dans lequel la pluralité de premiers liens de communication de référence est classée dans un premier type de liens de communication ;
l'acquisition d'une pluralité d'identifiants de liens à partir de la pluralité de premiers liens de communication de référence ;
la détermination d'un identifiant de lien cible correspondant au nom de domaine de réseau à partir de la pluralité d'identifiants de liens ; et
la prise d'un lien de communication correspondant à l'identifiant de lien cible en tant que lien de communication cible.

9. Appareil selon la revendication 8, dans lequel l'unité de traitement (601) est configurée pour déterminer le lien de communication cible à partir de la pluralité de seconds liens de communication de référence, comprenant :
la détermination de canaux correspondants utilisés par chaque lien de la pluralité de seconds liens de communication de référence ;
la détermination de paramètres de qualité de canaux respectifs des canaux utilisés par chaque second lien de communication de référence ; et
la détermination du lien de communication cible en fonction des paramètres de qualité de canaux.

10. Appareil (600) selon l'une quelconque des revendications 7 à 9, dans lequel l'unité de traitement (601) est en outre configurée pour :
transporter le message DNS d'une couche d'application d'un système d'exploitation Linux à une couche réseau par l'intermédiaire d'une couche de transport ; et
dans la couche réseau, lorsque le message DNS est transporté vers une accroche au niveau de la SORTIE pour l'envoi de paquets de données locales dans l'architecture du pare-feu, réaliser des opérations de l'analyse d'un message DNS, et acquérir un nom de domaine de réseau d'un réseau auquel on veut accéder à partir du message DNS et déterminer, sur la base du nom de domaine de réseau, un lien de communication cible à partir d'une pluralité de liens de communication ayant été connectés par l'exécution d'une fonction de traitement prédéfinie.

11. Dispositif électronique (500), comprenant un processeur (510), une mémoire (520), une interface de communication (530) et un ou plusieurs programmes (521), dans lequel les un ou plusieurs programmes (521) sont stockés dans la mémoire (520) et configurés pour être exécutés par le processeur (510), et les un ou plusieurs programmes (521) comprennent des instructions qui, lorsqu'elles sont exécutées par le processeur (510), amènent le processeur (510) à réaliser les étapes dans le procédé selon l'une quelconque des revendications 1 à 6.

12. Support d'enregistrement lisible par ordinateur, stockant un programme informatique pour un échange de données électroniques, dans lequel le programme informatique, lorsqu'il est exécuté par un ordinateur, amène l'ordinateur à réaliser le procédé selon l'une quelconque des revendications 1 à 6.
